# FASCICULE DE BREVET EUROPEEN

(11) **EP 2 831 514 B1**
(45) Date de publication et mention de la délivrance du brevet: **13.04.2022**
(21) Numéro de dépôt: 13706192.5
(22) Date de dépôt: 08.02.2013
(51) Int. Cl.: F24H 1/00, F24H 1/10, F24H 9/00, B60H 1/00, F28F 1/10, H05B 3/00

(54) **DISPOSITIF DE CHAUFFAGE ÉLECTRIQUE POUR VÉHICULE AUTOMOBILE, ET APPAREIL DE VENTILATION CHAUFFAGE ET/OU DE CLIMATISATION ASSOCIÉ**
ELEKTRISCHE HEIZVORRICHTUNG FÜR EIN KRAFTFAHRZEUG SOWIE HEIZUNGS-, LÜFTUNGS- UND/ODER KLIMATISIERUNGSVORRICHTUNG
ELECTRICAL HEATING DEVICE FOR A MOTOR VEHICLE, AND ASSOCIATED HEATING, VENTILATION AND/OR AIR CONDITIONING APPARATUS

(30) Priorité: 28.03.2012 FR 1200930
(43) Date de publication de la demande: 04.02.2015
(73) Titulaire: Valeo Systemes Thermiques, 78321 Le Mesnil-Saint-Denis (FR)
(72) Inventeur: PIERRON, Frédéric, F-78120 Rambouillet (FR); TELLIER, Laurent, F-75116 Paris (FR); LEBORGNE, José, F-28600 Luisant (FR)
(74) Mandataire: Valeo Systèmes Thermiques
(86) Numéro de dépôt international: PCT/EP2013/052527
(87) Numéro de publication internationale: WO 2013/143739

(56) Documents cités:
- EP-A2- 0 743 206
- EP-A2- 1 684 923
- WO-A1-2010/021939
- DE-A1- 10 012 675
- DE-A1- 19 944 951
- DE-A1-102010 060 446
- DE-U1- 29 508 171
- FR-A1- 2 074 687
- FR-A1- 2 214 870
- FR-A1- 2 855 359
- US-A- 2 775 683
- US-A1- 2001 018 828
- US-B1- 6 611 660
- ALEXANDER D: "Increased cooling performance from Denso", AUTOMOTIVE ENGINEERING INTERNATIONAL, SAE INTERNATIONAL, WARRENDALE, PA, US, vol. 114, no. 4, 1 avril 2006 (2006-04-01) , page 46, XP001515521, ISSN: 1543-849X

## Description

L'invention concerne un dispositif de chauffage électrique pour véhicule automobile. L'invention s'applique plus particulièrement aux appareils de ventilation, chauffage et/ou climatisation de véhicules automobiles.

De façon habituelle, le réchauffage de l'air destiné au chauffage de l'habitacle d'un véhicule automobile, ainsi qu'au désembuage et au dégivrage est assuré par passage d'un flux d'air à travers un échangeur de chaleur, plus précisément par un échange de chaleur entre le flux d'air et un fluide.

En général, il s'agit du fluide de refroidissement dans le cas d'un moteur thermique.

Toutefois, ce mode de chauffage peut s'avérer inadapté ou insuffisant pour garantir un chauffage rapide et efficace de l'habitacle du véhicule, en particulier pour assurer un réchauffement de l'habitacle ou dégivrage ou désembuage avant utilisation du véhicule en environnement très froid ou encore lorsqu'une montée très rapide de la température est souhaitée.

Dans le cas d'un véhicule électrique, la fonction de chauffage n'est plus réalisée par la circulation du fluide de refroidissement dans l'échangeur de chaleur.

On peut prévoir un circuit d'eau pour le chauffage de l'habitacle.

Ce mode de chauffage peut aussi s'avérer inadapté ou insuffisant pour garantir un chauffage rapide et efficace de l'habitacle du véhicule.

Par ailleurs, afin de réduire l'encombrement et le coût dûs au circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant, est dans ce cas utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode pompe à chaleur dépendent des conditions climatiques extérieures; et en cas d'air extérieur avec une température trop basse cet air ne peut pas être utilisé comme source d'énergie thermique.

Pour pallier ces inconvénients de l'art antérieur, une solution connue consiste à adjoindre à l'échangeur de chaleur ou au circuit d'eau ou encore à la boucle de climatisation, un dispositif de chauffage électrique additionnel.

Un tel dispositif de chauffage électrique peut être adapté pour chauffer en amont le fluide, tel que le fluide de refroidissement pour le moteur thermique, ou l'eau pour le circuit d'eau de chauffage de l'habitacle du véhicule électrique ou encore le fluide réfrigérant de la boucle de climatisation.

On connaît par exemple de tels dispositifs de chauffage électriques comprenant une pluralité de moyens de chauffe, tels que des éléments à coefficient de température positif ou PTC pour l'anglais "Positive Temperature Coefficient", reçus dans un boîtier de manière à définir une chambre de chauffage autour de la pluralité de moyens de chauffe PTC et dans laquelle le fluide à chauffer circule.

Toutefois, de tels dispositifs de chauffage présentent un encombrement relativement important et peuvent être assez lourds.

De plus, ces dispositifs de chauffage électrique connus peuvent présenter une perte de charge relativement importante qui ne rentre pas en adéquation avec les valeurs de référence imposées par certains constructeurs automobiles.

En outre, certains dispositifs de chauffage connus peuvent présenter une inertie de chauffe importante limitant les performances thermiques. Les documents WO 2010/021939 A1 et FR 2 855 359 A1 montrent des modes de réalisation comprenant les caractéristiques du préambule de la revendication 1.

L'invention a donc pour objectif de pallier au moins partiellement les inconvénients de l'art antérieur en proposant un dispositif de chauffage électrique limitant la perte de charge et l'inertie de chauffe tout en présentant un faible encombrement.

À cet effet, l'invention a pour objet un dispositif de chauffage électrique de fluide pour véhicule automobile, ledit dispositif de chauffage comprenant au moins un module de chauffe dudit fluide, ledit au moins un module de chauffe comprenant un noyau central et un élément chauffant définissant un circuit de guidage du fluide entre ledit élément chauffant et ledit noyau central, caractérisé en ce que ledit au moins un module de chauffe comprend au moins un élément perturbateur agencé dans le circuit de guidage du fluide autour du noyau central apte à perturber l'écoulement dudit fluide.

Selon un autre aspect du dispositif de chauffage, l'élément perturbateur s'étend au moins partiellement sur toute la longueur dudit circuit de guidage.

Selon un autre aspect du dispositif de chauffage, l'élément perturbateur présente une forme générale tubulaire.

Selon un autre aspect du dispositif de chauffage, l'élément perturbateur est réalisé en matériau métallique.

Selon l'invention, l'élément perturbateur est en contact avec une surface interne de l'élément chauffant.

Selon un autre aspect du dispositif de chauffage, l'élément perturbateur est en contact avec une surface externe du noyau central.

Selon un autre aspect du dispositif de chauffage, l'élément perturbateur s'étend au moins partiellement sur toute l'épaisseur du circuit de guidage.

Selon un autre aspect du dispositif de chauffage, l'élément perturbateur comprend au moins une nervure.

Selon un autre aspect du dispositif de chauffage, la nervure est sensiblement hélicoïdale.

Selon un autre aspect du dispositif de chauffage, la nervure est dirigée vers la surface interne de l'élément chauffant.

Selon un autre aspect du dispositif de chauffage, l'élément perturbateur comprend des bossages saillants.

Selon un autre aspect du dispositif de chauffage, les bossages saillants sont dirigés vers la surface interne de l'élément chauffant.

Selon l'invention, l'élément perturbateur est un élément distinct du noyau central et de l'élément chauffant.

Selon l'invention, l'élément perturbateur comprend une feuille métallique.

Selon un autre aspect du dispositif de chauffage, l'élément perturbateur est monté en contrainte dans l'élément chauffant.

Selon un autre aspect non couvert par l'invention, l'élément perturbateur et le noyau central sont formés d'une seule pièce.

L'invention comporte aussi un appareil de ventilation, chauffage et/ou climatisation pour véhicule automobile, comprenant au moins un dispositif de chauffage électrique de la présente invention.

En perturbant l'écoulement du fluide dans le circuit de guidage, l'élément perturbateur favorise l'échange thermique entre le fluide et l'élément chauffant, ce qui permet d'améliorer l'efficacité du dispositif de chauffage.

L'élément perturbateur peut être métallique et permettre, grâce à ses bonnes propriétés de conduction thermique, une meilleure conduction de la chaleur provenant de l'élément chauffant jusque dans une section du circuit de guidage éloignée de l'élément chauffant.

De plus, lorsque l'élément perturbateur est en contact avec la surface interne de l'élément chauffant, la conduction de la chaleur dans les zones de fluide éloignées dudit élément chauffant est d'autant plus améliorée. Ceci permet aussi d'améliorer l'efficacité du dispositif de chauffage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique et simplifiée un appareil de ventilation, chauffage et/ou de climatisation de véhicule automobile comprenant un dispositif de chauffage électrique de fluide selon la présente invention,
- la figure 2 illustre un dispositif de chauffage avec une vue en coupe selon un axe radial d'un module de chauffe,
- la figure 3a est une vue en perspective et en coupe sensiblement transversale de l'élément perturbateur d'un dispositif de chauffage selon un premier mode de réalisation,
- la figure 3b est une vue en perspective et en coupe sensiblement transversale du dispositif de chauffage de la figure 3a avec un élément chauffant,
- la figure 3c est une vue de face de l'élément perturbateur de la figure 3a,
- la figure 4a est une vue en perspective d'un élément perturbateur représenté partiellement hors de l'élément chauffant d'un dispositif de chauffage selon une variante du premier mode de réalisation,
- la figure 4b représente une feuille métallique représentée à plat de l'élément perturbateur du dispositif de chauffage de la figure 4a,
- la figure 5 est une vue en perspective d'un élément perturbateur autour d'un noyau central d'un dispositif de chauffage selon un deuxième mode de réalisation,
- la figure 6a, est une vue en perspective d'un élément perturbateur d'un dispositif de chauffage selon une variante du deuxième mode de réalisation, et
- la figure 6b, est une vue en perspective et en coupe partielle sensiblement transversale du dispositif de chauffage de la figure 6a avec un élément chauffant.

Dans ces figures, les éléments sensiblement identiques portent les mêmes références.

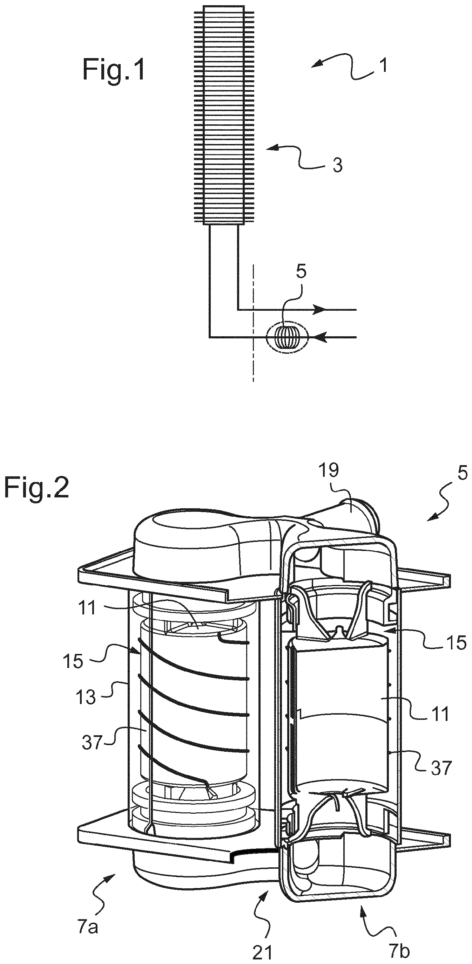

La figure 1 montre de façon schématique une partie d'un appareil de ventilation, chauffage et/ou climatisation 1 de véhicule automobile, comprenant un circuit de chauffage d'eau 3 pour le chauffage de l'habitacle d'un véhicule électrique.

Cet appareil de ventilation, chauffage et/ou climatisation 1 comprend en amont du circuit de chauffage d'eau 3 un dispositif de chauffage électrique 5 pour chauffer l'eau avant son entrée dans le circuit de chauffage 3.

On a représenté ici le cas d'un circuit d'eau pour le chauffage de l'habitacle d'un véhicule électrique.

Bien entendu, on peut aussi prévoir que le dispositif de chauffage électrique 5 soit disposé en amont de l'évaporateur d'une boucle de climatisation apte à fonctionner en mode pompe à chaleur, de façon à chauffer le fluide réfrigérant.

On pourrait encore prévoir un tel dispositif de chauffage électrique 5 en amont d'un échangeur de chaleur utilisant le fluide de refroidissement du moteur thermique comme fluide caloporteur. On pourrait aussi prévoir un tel dispositif de chauffage électrique 5 en amont d'un échangeur de chaleur destiné à la régulation thermique d'un dispositif de stockage de l'énergie électrique, parfois qualifié d'ensemble de batteries, pour un véhicule à propulsion électrique ou hybride.

La figure 2 montre de façon schématique un exemple de dispositif de chauffage électrique 5.

Le dispositif de chauffage 5 comporte par exemple au moins un premier module de chauffe 7a et un deuxième module de chauffe 7b mis côte à côte de façon sensiblement parallèle. Le dispositif de chauffage 5, avec un tel agencement des modules de chauffe 7a, 7b, présente une inertie de chauffe moins élevée. Cet agencement permet également de réduire l'encombrement du dispositif de chauffage 5 et permet une plus grande efficacité de chauffe du fluide en réduisant le volume dudit fluide dans les modules de chauffe 7a, 7b.

En outre, avec un tel dispositif de chauffage 5 on obtient une perte de charge inférieure à 100 mbar à 1000L/h. Ces résultats permettent de répondre aux contraintes relatives à la perte de charge imposées par certains constructeurs automobiles.

Un module de chauffe 7a, 7b comprend un noyau central 11 et un élément chauffant 13 réalisé sous la forme d'une enceinte entourant sensiblement le noyau central 11. L'élément chauffant 13 peut par exemple être piloté par un système de commande (non représenté).

Le noyau central 11 et l'élément chauffant 13 sont par exemple sensiblement cylindriques.

Le noyau central 11 et l'élément chauffant 13 peuvent être concentriques.

Le noyau central 11 et l'élément chauffant 13 définissent un circuit de guidage 15 du fluide à chauffer entre le noyau central 11 et l'élément chauffant13. En d'autres termes, la surface externe du noyau central 11 et la surface interne de l'élément chauffant 13 définissent un volume de circulation du fluide à chauffer autour du noyau central 11.

Le dispositif de chauffage 5 comporte en outre au moins une tubulure d'entrée de fluide 19 et au moins une tubulure de sortie 21 de fluide. Les tubulures d'entrée 19 et de sortie 21 sont par exemple respectivement agencées en saillie par rapport au dispositif de chauffage 5.

Dans l'exemple illustré, la tubulure d'entrée 19 est commune aux deux modules de chauffe 7a, 7b. De même, la tubulure de sortie 21 est commune aux deux modules de chauffe 7a, 7b.

Afin d'augmenter l'échange thermique entre le fluide et l'élément chauffant 13, un élément perturbateur 37 du module de chauffe est disposé dans le circuit de guidage 15 autour du noyau central 11 afin de perturber l'écoulement du fluide.

Selon l'exemple, le fluide entre dans le dispositif de chauffage 5 par la tubulure d'entrée 19. Il pénètre ensuite dans chacun des modules de chauffe 7a, 7b. Il s'écoule de façon perturbée le long du circuit de guidage 15. Un transfert thermique s'opère alors entre la surface interne de l'élément chauffant 13 et le fluide. En effet, l'élément chauffant 13 cède de la chaleur au fluide. Puis, le fluide réchauffé sort du dispositif de chauffage 5 par la tubulure de sortie 21.

En perturbant l'écoulement du fluide dans le circuit de guidage 15, l'élément perturbateur 37 favorise l'échange thermique entre le fluide et l'élément chauffant 13, ce qui permet d'améliorer l'efficacité du dispositif de chauffage 5.

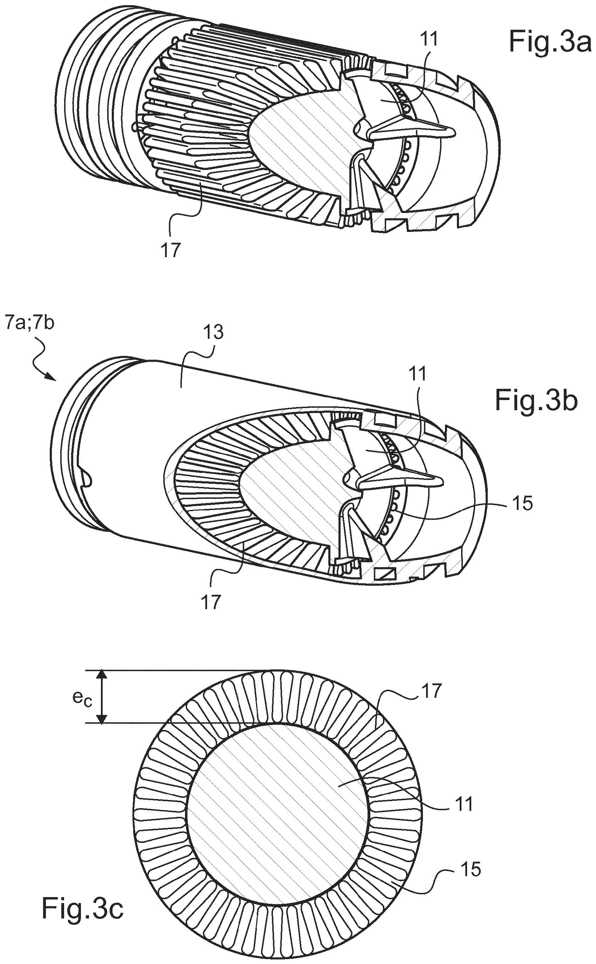

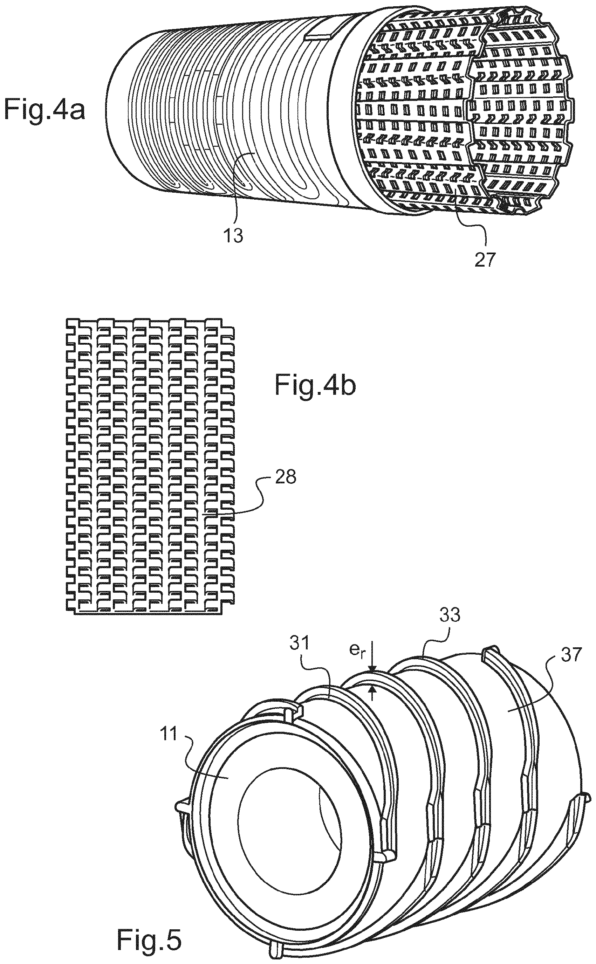

Selon un premier mode de réalisation illustré par les figures 3a, 3b, 3c, 4a et 4b, l'élément perturbateur 17, 27 agencé entre le noyau central 11 et l'élément chauffant 13, est en contact avec la surface interne de l'élément chauffant 13. L'élément perturbateur 17, 27 peut s'étendre en direction du noyau central 11.

Ledit élément perturbateur 17, 27 réalisé en matériau métallique présente une surface en contact avec le fluide. Grâce aux bonnes propriétés de conduction thermique du matériau métallique, l'élément perturbateur 17, 27 conduit la chaleur de l'élément chauffant 13 vers le noyau central 11 jusque dans une section du circuit de guidage 15 éloignée de l'élément chauffant 13. Ainsi la température du fluide dans le circuit de guidage est homogène de sorte que la partie du fluide circulant à proximité de la surface interne de l'élément chauffant 13 et la partie du fluide circulant à distance de l'élément chauffant 13 sont sensiblement à la même température

Ledit élément perturbateur 17, 27 comprend par exemple une feuille en aluminium, en cuivre ou en laiton. La feuille métallique est de préférence en aluminium. En effet ce matériau présente une bonne tenue à la corrosion ainsi qu'une bonne compatibilité avec le fluide glycolé utilisé dans le dispositif de chauffage électrique. De plus, ce matériau présente un coût réduit.

Selon un premier mode de réalisation de la présente invention représenté aux figures 3a, 3b et 3c, l'élément perturbateur 17 comprend une feuille métallique. La feuille métallique peut être ondulée, c'est à dire repliée sur elle-même en accordéon et on parle alors d'élément perturbateur 17 métallique en « ailettes ». Les deux bordures longitudinales de la feuille métallique peuvent être rejointes de façon à former un tube présentant une section par exemple sensiblement circulaire.

Les arrêtes internes des ailettes de l'élément perturbateur 17 métallique sont aussi en contact avec la surface externe du noyau central 11. L'élément perturbateur 17 métallique en «ailettes» s'étend au moins partiellement sur toute l'épaisseur *e_{c}* du circuit de guidage 15. Lorsque celle-ci s'étend sur toute l'épaisseur *e_{c}* du circuit de guidage 15, le transfert thermique est amélioré.

L'efficacité de l'échange thermique augmente avec la taille de la surface d'échange thermique, c'est-à-dire avec la taille de la surface de l'élément perturbateur 17 métallique en « ailettes » dans le cas présent.

Selon une variante du premier mode de réalisation représentée à la figure 4a, l'élément perturbateur 27 comprend une feuille métallique présentant un motif en relief, par exemple des bossages réguliers et régulièrement répartis. Ces bossages peuvent être réalisés par déformation de la feuille métallique 28 comme illustrés par la figure 4b. Les deux bordures longitudinales de la feuille se rejoignent de façon à former un tube présentant une section par exemple sensiblement circulaire.

L'épaisseur de l'élément perturbateur 27 métallique peut être réduite par rapport à l'épaisseur du circuit de guidage 15. On parle d'élément perturbateur 27 métallique « fin ».

On prévoit de fabriquer l'élément perturbateur 27 métallique fin de façon à ce que son diamètre externe soit sensiblement supérieur au diamètre interne de l'élément chauffant 13. De cette façon, l'élément perturbateur 27 métallique fin est monté en contrainte dans l'élément chauffant 13, ce qui assure un bon contact et par conséquent, un bon transfert thermique entre l'élément chauffant 13 et l'élément perturbateur 27 métallique fin.

Selon une autre forme de réalisation, on relie la surface externe de l'élément perturbateur 27 métallique fin avec la surface interne de l'élément chauffant 13, par exemple en les brasant ou en les soudant pour assurer un bon contact mécanique et thermique.

Par rapport à l'élément perturbateur 17 métallique en « ailettes » des figures 3a, 3b, 3c, l'élément perturbateur 27 métallique fin des figures 4a, 4b a pour avantage de présenter moins de pertes de charge.

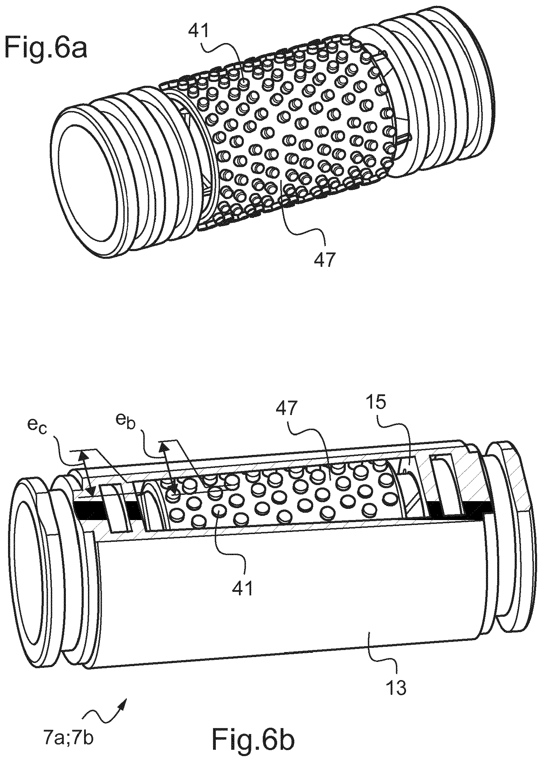

On décrit maintenant en référence aux figures 5, 6a et 6b, un deuxième mode de réalisation. Dans ce deuxième mode de réalisation la surface interne de l'élément perturbateur 37, 47 est en contact avec la surface externe du noyau central 11.

L'élément perturbateur 37, 47 peut par exemple être réalisé en matériau métallique tel que l'aluminium, ou bien encore en matériau plastique tel que le polyamide.

La surface externe de l'élément perturbateur 37, 47 tubulaire présente des déformations de façon à perturber l'écoulement du fluide le long du circuit de guidage 15.

Selon un deuxième mode de réalisation représenté en figure 5, la surface externe de l'élément perturbateur 37 présente au moins une nervure 31 dirigée en direction de la surface interne de l'élément chauffant 13. La nervure 31 peut présenter une forme sensiblement hélicoïdale. L'écoulement du fluide le long du circuit de guidage suit donc un trajet sensiblement hélicoïdal. La nervure 31 de l'élément perturbateur 37 crée ainsi des perturbations dans l'écoulement du fluide, améliorant ainsi l'échange thermique entre l'élément chauffant 13 et le fluide.

L'épaisseur *eᵣ* de la nervure 31 peut s'étendre jusqu'à la surface interne de l'élément chauffant 13.

L'échange thermique est optimal quand l'arrête 33 de la nervure 31 est en contact avec la surface interne de l'élément chauffant 13. Dans ce cas, il est possible de fixer l'élément perturbateur 37 à la surface interne de l'élément chauffant 13 au niveau de l'arrête 33 de la nervure 31, par exemple par brasage ou soudage. Dans ce cas, l'élément perturbateur 37 est fabriqué en matériau métallique.

Selon d'autres formes de réalisation, ladite nervure 31 peut avoir une épaisseur *eᵣ* intermédiaire, dans ce cas, l'élément perturbateur 37 présente une épaisseur inférieure à l'épaisseur du circuit de guidage 15.

Selon une variante du deuxième mode de réalisation représentée sur les figures 6a, 6b la surface externe de l'élément perturbateur 47 présente des bossages 41 saillants en direction de la surface interne de l'élément chauffant 13. Les bossages 41 de l'élément perturbateur 47 créent des perturbations dans l'écoulement du fluide, améliorant ainsi l'échange thermique entre l'élément chauffant 13 et le fluide. Ces bossages 41 peuvent être répartis irrégulièrement ou régulièrement sur la surface du noyau central ou sur la surface de l'élément perturbateur ou toutes autres surfaces en contact avec le fluide à perturber.

Comme illustré sur la figure 6b, l'épaisseur *e_{b}* des bossages 41 peut s'étendre jusqu'à la surface interne de l'élément chauffant 13 de façon à être en contact avec ladite surface interne de l'élément chauffant 13.

Selon d'autres formes de réalisation, les bossages 41 peuvent aussi avoir une épaisseur *e_{b}* intermédiaire, dans ce cas, l'élément perturbateur 47 présente une épaisseur inférieure à l'épaisseur *e_{c}* du circuit de guidage.

Selon une forme de réalisation (non représentée), la surface interne de l'élément chauffant 13 présente au moins un élément perturbateur 17, 27.

On décrit maintenant, un troisième mode de réalisation non couvert par l'invention (non représenté). Ce troisième mode de réalisation diffère du deuxième mode de réalisation par le fait que l'élément perturbateur et le noyau central sont formés d'une seule pièce.

Dans cette configuration, l'élément perturbateur comprend une déformation agencée sur la surface externe du noyau central de façon à perturber la circulation du fluide le long du circuit de guidage.

Selon ce troisième mode de réalisation, l'élément perturbateur peut comprendre au moins une nervure. Ladite nervure étant dirigée vers la surface interne de l'élément de chauffant.

Ladite nervure peut être de forme sensiblement hélicoïdale. La nervure de l'élément perturbateur crée ainsi des perturbations dans l'écoulement du fluide, améliorant ainsi l'échange thermique entre l'élément chauffant et le fluide.

L'épaisseur de la nervure peut s'étendre jusqu'à la surface interne de l'élément chauffant. Ladite nervure peut aussi avoir une épaisseur intermédiaire c'est à dire inférieure à l'épaisseur du circuit de guidage.

Selon une variante du troisième mode de réalisation, l'élément perturbateur peut comprendre des bossages. Lesdits bossages étant dirigés vers la surface interne de l'élément de chauffe.

Les bossages de l'élément perturbateur créent des perturbations dans l'écoulement du fluide, améliorant ainsi l'échange thermique entre l'élément chauffant et le fluide.

L'épaisseur desdits bossages peut s'étendre jusqu'à la surface interne de l'élément chauffant. Lesdits bossages peuvent aussi avoir une épaisseur intermédiaire c'est à dire inférieure à l'épaisseur du circuit de guidage.

On comprend donc qu'un dispositif de chauffage 5 comprenant au moins un élément perturbateur 17, 27, 37, 47 permettant un transfert thermique entre l'élément chauffant 13 et le fluide plus efficace par rapport aux solutions de l'art antérieur.

## Revendications

1. Dispositif de chauffage électrique (5) de fluide pour véhicule automobile, ledit dispositif de chauffage (5) comprenant au moins un module de chauffe (7a, 7b) dudit fluide, ledit au moins un module de chauffe (7a, 7b) comprenant un noyau central (11) et un élément chauffant (13) définissant un circuit de guidage (15) du fluide entre ledit élément chauffant (13) et ledit noyau central (11), ledit au moins un module de chauffe (7a, 7b) comprenant au moins un élément perturbateur (17 ; 27 ; 37 ; 47) agencé dans le circuit de guidage (15) du fluide autour du noyau central (11) apte à perturber l'écoulement dudit fluide, l'élément perturbateur (17, 27, 37, 47) étant en contact avec une surface interne de l'élément chauffant (13), **caractérisé en ce que** l'élément perturbateur (17, 27, 37, 47) est un élément distinct du noyau central (11) et de l'élément chauffant (13) et comprend une feuille métallique.

2. Dispositif de chauffage électrique selon la revendication 1, **caractérisé en ce que** ledit élément perturbateur (17, 27, 37, 47) s'étend au moins partiellement sur toute la longueur dudit circuit de guidage (15).

3. Dispositif de chauffage électrique selon la revendication 1 ou 2, **caractérisé en ce que** l'élément perturbateur (17, 27, 37, 47) présente une forme générale tubulaire.

4. Dispositif de chauffage électrique selon l'une quelconque des revendications 1 à 3, **caractérisé en ce que** l'élément perturbateur (17, 27, 37, 47) est réalisé en matériau métallique.

5. Dispositif de chauffage électrique selon l'une des revendications 1 à 4, **caractérisé en ce que** l'élément perturbateur (17, 27, 37, 47) est en contact avec une surface externe du noyau central (11).

6. Dispositif de chauffage électrique selon l'une des revendications 1 à 5, **caractérisé en ce que** l'élément perturbateur (17, 27, 37, 47) s'étend au moins partiellement sur toute l'épaisseur (*e_{c})* du circuit de guidage (15).

7. Dispositif de chauffage électrique selon l'une quelconque des revendications 1 à 6, **caractérisé en ce que** l'élément perturbateur (37) comprend au moins une nervure (31).

8. Dispositif de chauffage électrique selon la revendication 7, **caractérisé en ce que** ladite au moins une nervure (31) est sensiblement hélicoïdale.

9. Dispositif de chauffage électrique selon l'une quelconque des revendications 7 ou 8, **caractérisé en ce que** ladite nervure (31) est dirigée vers la surface interne de l'élément chauffant (13).

10. Dispositif de chauffage électrique selon l'une quelconque des revendications 1 à 9, **caractérisé en ce que** l'élément perturbateur (47) comprend des bossages saillants (41).

11. Dispositif de chauffage électrique selon la revendication 10, **caractérisé en ce que** les bossages saillants (41) sont dirigés vers la surface interne de l'élément chauffant (13).

12. Dispositif de chauffage électrique selon l'une quelconque des revendications précédentes, **caractérisé en ce que** l'élément perturbateur (27) est monté en contrainte dans l'élément chauffant (13).

13. Appareil de ventilation, chauffage et/ou climatisation (1) pour véhicule automobile, **caractérisé en ce qu'**il comprend au moins un dispositif de chauffage électrique (5) selon l'une des revendications précédentes.

## Patentansprüche

1. Elektrische Fluidheizvorrichtung (5) für ein Kraftfahrzeug, wobei die Heizvorrichtung (5) wenigstens ein Modul zur Erwärmung (7a, 7b) des Fluids umfasst, das wenigstens eine Erwärmungsmodul (7a, 7b) einen Mittelkern (11) und ein Heizelement (13) umfasst, die einen Kreislauf zur Führung (15) des Fluids zwischen dem Heizelement (13) und dem Mittelkern (11) definieren, wobei das wenigstens eine Erwärmungsmodul (7a, 7b) wenigstens ein Störelement (17; 27; 37; 47) umfasst, das im Kreislauf zur Führung (15) des Fluids um den Mittelkern (11) angeordnet ist, das geeignet ist, die Strömung des Fluids zu stören, wobei das Störelement (17, 27, 37, 47) mit einer Innenfläche des Heizelements (13) in Kontakt steht, **dadurch gekennzeichnet, dass** das Störelement (17, 27, 37, 47) ein Element ist, das vom Mittelkern (11) und vom Heizelement (13) gesondert ist und ein Metallblech umfasst.

2. Elektrische Heizvorrichtung nach Anspruch 1, **dadurch gekennzeichnet, dass** sich das Störelement (17, 27, 37, 47) wenigstens teilweise über die gesamte Länge des Führungskreislaufs (15) erstreckt.

3. Elektrische Heizvorrichtung nach Anspruch 1 oder 2, **dadurch gekennzeichnet, dass** das Störelement (17, 27, 37, 47) allgemein röhrenförmig ist.

4. Elektrische Heizvorrichtung nach einem der Ansprüche 1 bis 3, **dadurch gekennzeichnet, dass** das Störelement (17, 27, 37, 47) aus Metallmaterial hergestellt ist.

5. Elektrische Heizvorrichtung nach einem der Ansprüche 1 bis 4, **dadurch gekennzeichnet, dass** das Störelement (17, 27, 37, 47) mit einer Außenfläche des Mittelkerns (11) in Kontakt steht.

6. Elektrische Heizvorrichtung nach einem der Ansprüche 1 bis 5, **dadurch gekennzeichnet, dass** sich das Störelement (17, 27, 37, 47) wenigstens teilweise über die gesamte Dicke (ec) des Führungskreislaufs (15) erstreckt.

7. Elektrische Heizvorrichtung nach einem der Ansprüche 1 bis 6, **dadurch gekennzeichnet, dass** das Störelement (37) wenigstens eine Rippe (31) umfasst.

8. Elektrische Heizvorrichtung nach Anspruch 7, **dadurch gekennzeichnet, dass** die wenigstens eine Rippe (31) im Wesentlichen spiralförmig ist.

9. Elektrische Heizvorrichtung nach einem der Ansprüche 7 oder 8, **dadurch gekennzeichnet, dass** die Rippe (31) zur Innenfläche des Heizelements (13) gerichtet ist.

10. Elektrische Heizvorrichtung nach einem der Ansprüche 1 bis 9, **dadurch gekennzeichnet, dass** das Störelement (47) hervorstehende Erhebungen (41) umfasst.

11. Elektrische Heizvorrichtung nach Anspruch 10, **dadurch gekennzeichnet, dass** die hervorstehenden Erhebungen (41) zur Innenfläche des Heizelements (13) gerichtet sind.

12. Elektrische Heizvorrichtung nach einem der vorhergehenden Ansprüche, **dadurch gekennzeichnet, dass** das Störelement (27) unter Spannung im Heizelement (13) eingesetzt ist.

13. Belüftungs-, Heiz- und/oder Klimasteuerungsvorrichtung (1) für ein Kraftfahrzeug, **dadurch gekennzeichnet, dass** sie wenigstens eine elektrische Heizvorrichtung (5) nach einem der vorhergehenden Ansprüche umfasst.

## Claims

1. Electric fluid-heating device (5) for a motor vehicle, said heating device (5) comprising at least one module (7a, 7b) for heating said fluid, said at least one heating module (7a, 7b) comprising a central insert (11) and a heating element (13) defining a guide circuit (15) for the fluid between said heating element (13) and said central insert (11), said at least one heating module (7a, 7b) comprising at least one disruptor element (17; 27; 37; 47) arranged in the guide circuit (15) for the fluid around the central insert (11) that is able to disrupt the flow of said fluid, the disruptor element (17, 27, 37, 47) being in contact with an inner surface of the heating element (13), **characterized in that** the disruptor element (17, 27, 37, 47) is a separate element from the central insert (11) and from the heating element (13) and comprises a metal sheet.

2. Electric heating device according to Claim 1, **characterized in that** said disruptor element (17, 27, 37, 47) extends at least partially over the entire length of said guide circuit (15).

3. Electric heating device according to Claim 1 or 2, **characterized in that** the disruptor element (17, 27, 37, 47) has a tubular overall shape.

4. Electric heating device according to any one of Claims 1 to 3, **characterized in that** the disruptor element (17, 27, 37, 47) is made of metal material.

5. Electric heating device according to one of Claims 1 to 4, **characterized in that** the disruptor element (17, 27, 37, 47) is in contact with an outer surface of the central insert (11).

6. Electric heating device according to one of Claims 1 to 5, **characterized in that** the disruptor element (17, 27, 37, 47) extends at least partially over the entire thickness (ec) of the guide circuit (15).

7. Electric heating device according to any one of Claims 1 to 6, **characterized in that** the disruptor element (37) comprises at least one rib (31).

8. Electric heating device according to Claim 7, **characterized in that** said at least one rib (31) is substantially helical.

9. Electric heating device according to either one of Claims 7 and 8, **characterized in that** said rib (31) is directed towards the inner surface of the heating element (13) .

10. Electric heating device according to any one of Claims 1 to 9, **characterized in that** the disruptor element (47) comprises projecting bosses (41).

11. Electric heating device according to Claim 10, **characterized in that** the projecting bosses (41) are directed towards the inner surface of the heating element (13) .

12. Electric heating device according to any one of the preceding claims, **characterized in that** the disruptor element (27) is mounted under stress in the heating element (13).

13. Heating, ventilating and/or air conditioning apparatus (1) for a motor vehicle, **characterized in that** it comprises at least one electric heating device (5) according to one of the preceding claims.
